# EUROPEAN PATENT APPLICATION

(11) **EP 3 530 524 A1**
(43) Date of publication of application: **28.08.2019**
(21) Application number: 17875820.7
(22) Date of filing: 24.11.2017
(51) Int. Cl.: B60R 13/00, B29C 45/14, G01S 7/03

(54) **RADAR COVER AND METHOD FOR MANUFACTURING RADAR COVER**

(30) Priority: 30.11.2016 JP 2016232447; 09.12.2016 JP 2016239470
(71) Applicant: Faltec Co., Ltd., Kawasaki-shi, Kanagawa 212-0013 (JP)
(72) Inventor: OCHIAI Takumi, Kawasaki-shi Kanagawa 212-0013 (JP)
(74) Representative: Troesch Scheidegger Werner AG
(86) International application number: PCT/JP2017/042213
(87) International publication number: WO 2018/101165

(57) **Abstract**

A radar cover which is disposed on an electric wave traveling path of a radar unit which detects a surrounding situation of a vehicle, includes a transparent member having a first surface and a second surface on the side opposite to the first surface, a support member which supports the second surface of the transparent member, and a colored layer which is formed on the second surface and disposed between the second surface of the transparent member and the support member, in which the transparent member has a recessed portion having an inner wall surface bent and connected to a colored layer formation area in which the colored layer is formed.

## Description

### TECHNICAL FIELD

The present invention relates to a radar cover and a method for manufacturing the radar cover.

Priority is claimed on Japanese Patent Application No. 2016-232447, filed on November 30, 2016, and Japanese Patent Application No. 2016-239470, filed on December 9, 2016, the contents of which are incorporated herein by reference.

### BACKGROUND ART

In recent years, a radar unit which detects an obstacle or the like around a vehicle by using electric waves such as millimeter waves has been mounted on the vehicle. In general, the radar unit is installed in a state of being covered with a radar cover decorated with an emblem or the like. Such a radar unit performs transmission and reception of the electric waves transmitting through the radar cover. For this reason, naturally, it is necessary to form the radar cover so as to be capable of transmitting the electric waves, as disclosed in, for example, Patent Document 1.

Further, such a radar unit is mounted on the vehicle in a state where at least some of members are covered with the radar cover formed of resin capable of transmitting the electric waves.

A member configuring such a radar cover is generally formed by injection molding in which molten resin is injected and molded inside a mold. For example, Patent Document 2 discloses a method for manufacturing a radar cover in which a transparent member forming the front surface side of a radar cover and a support member supporting the transparent member are formed by injection molding.

### PRIOR ART DOCUMENTS

### PATENT DOCUMENTS

[Patent Document 1] Japanese Unexamined Patent Application, First Publication No. 2016-141355
[Patent Document 2] Japanese Unexamined Patent Application, First Publication No. 2016-150497

### DISCLOSURE OF INVENTION

### PROBLEMS TO BE SOLVED BY THE INVENTION

Incidentally, the radar cover as disclosed in Patent Document 1 described above has a transparent member which is generally disposed toward the outside of the vehicle and a support member which supports the transparent member from the back side, and has a structure in which the transparent member and the support member are integrally formed by two-color molding of resin. For this reason, in a case where a colored layer is formed between the transparent member and the support member, the colored layer can be visually recognized from outside through the transparent member, and an emblem or a pattern can be formed by the colored layer. In a case of forming the colored layer between the transparent member and the support member, it is conceivable to form the colored layer by applying ink to the back surface of the transparent member by printing or the like.

On the other hand, it is common to form a recessed portion on the back surface of the transparent member in order to allow the emblem or the pattern to be visually recognized three-dimensionally. However, a boundary portion between a colored layer formation area in which the colored layer is formed and the inner wall surface of the recessed portion is formed as a curved surface in which the colored layer formation area and the inner wall surface of the recessed portion are connected to each other without bending. This is because, when forming the transparent member by injection molding, in terms of mold making, it is generally difficult to bend and connect the surface of a protrusion portion for forming the recessed portion and a flat surface for forming the colored layer formation area in the mold. In Patent Document 1 or the like, the inner wall surface of the recessed portion formed in the back surface of the transparent member is shown as being bent and connected to the flat surface around the inner wall surface of the recessed portion. However, this is merely a schematic illustration, and in an actual product, the inner wall surface of the recessed portion and the flat surface around the inner wall surface of the recessed portion are connected to each other by a curved surface having a curvature radius of about 0.5 mm.

Incidentally, if the boundary portion between the colored layer formation area in which the colored layer is formed and the inner wall surface of the recessed portion is a curved surface, for example, ink at the time of forming the colored layer partially moves along the curved surface before drying, and as a result, there is a case where an end portion of the colored layer slightly meanders unintentionally.

The radar cover is a part which is generally mounted to a conspicuous place such as the front face of the vehicle and forms a deep external appearance impression of the vehicle, and therefore, it is preferable to eliminate even slight meandering of the end portion of the colored layer. In recent years, in terms of the design of the vehicle, a large-sized radar cover which greatly exceeds the transmission range of the radar also has been manufactured and various patterns or the like has been applied to the radar cover. For this reason, it is desired to propose a technique capable of reliably preventing unintentional meandering of the end portion of the colored layer in the radar cover.

Further, in the radar cover as disclosed in Patent Document 2 described above, in a case where the colored layer is formed between the transparent member and the support member, it is possible to visually recognize the colored layer from the outside through the transparent member and to form an emblem or a pattern by the colored layer. On the other hand, for example, in consideration of the design property or the mountability of the radar cover, there is a case of adopting a shape in which an outer edge portion of the transparent member protrudes laterally beyond the support member. In such a case, an area which is not covered with the support member is generated in a part (an outer edge portion) of the back surface of the transparent member, on which the colored layer is formed. In such an area, a state where the colored layer is exposed is created, and thus there is a concern that deterioration of the colored layer may be accelerated. The deterioration of the colored layer may cause discoloration or the like of the emblem or pattern which is formed by the colored layer and may greatly affect the formation of the external appearance impression of the vehicle.

The present invention has been made in view of the above-described problems and a first object of the present invention is to prevent unintentional meandering of an end portion of a colored layer in a radar cover in which the colored layer is formed between a transparent member having a recessed portion on the back surface thereof and a support member.

Further, the present invention has been made in view of the above-described problems and a second object of the present invention is to suppress deterioration of a colored layer which is not covered with a support member at an outer edge portion of a transparent member in a radar cover in which the support member is joined to the back surface of the transparent member.

### MEANS FOR SOLVING THE PROBLEMS

The present invention adopts the following configurations as means for solving the above problems.

According to a first aspect of the present invention, there is provided a radar cover which is disposed on an electric wave traveling path of a radar unit which detects a surrounding situation of a vehicle, the radar cover including: a transparent member having a first surface and a second surface on the side opposite to the first surface; a support member which supports the transparent member; and a colored layer which is formed on the second surface and disposed between the second surface of the transparent member and the support member, in which the transparent member has a recessed portion having an inner wall surface bent and connected to a colored layer formation area in which the colored layer is formed.

The transparent member may have a painted recessed portion in which paint having a color different from that of the colored layer is applied to an inner wall surface, as the recessed portion.

The paint may cover a surface adjacent to the support member, of the colored layer.

The transparent member may have an inner core accommodation recessed portion in which an inner core having a glittering discontinuous film is accommodated, as the recessed portion.

According to a second aspect of the present invention, there is provided a method for manufacturing a radar cover which is disposed on an electric wave traveling path of a radar unit which detects a surrounding situation of a vehicle, the method including: a transparent member forming step of forming a transparent member having a first surface and a second surface on the side opposite to the first surface and having a recessed portion having an inner wall surface bent and connected to a colored layer formation area in which a colored layer which is provided on the second surface is formed; a colored layer forming step of forming the colored layer in the colored layer formation area of the transparent member; and a support member forming step of forming a support member so as to cover a surface of the transparent member, on which the colored layer is formed.

In the colored layer forming step, the colored layer may be formed by a printing method.

Before the support member forming step, an application step of applying paint having a color different from that of the colored layer to an inner wall surface of at least a part of the recessed portion may be performed.

In the application step, the paint may be applied so as to cover the colored layer.

Before the support member forming step, an inner core installation step of accommodating an inner core having a glittering discontinuous film in at least a part of the recessed portion may be performed.

According to a third aspect of the present invention, there is provided a radar cover which is disposed on an electric wave traveling path of a radar unit which detects a surrounding situation of a vehicle, the radar cover including: a plate-shaped transparent member having a first surface and a second surface on the side opposite to the first surface and formed of resin; a support member which supports the second surface of the transparent member in a state where at least a part of an outer edge portion of the second surface of the transparent member is exposed; a colored layer which is formed at least in an area which is the outer edge portion of the second surface of the transparent member and is not covered with the support member; and a covering film which covers the colored layer in the area which is not covered with the support member.

The thickness of the covering film may be smaller than the thickness of the support member.

The covering film may be formed of the same material as that of the support member.

According to a fourth aspect of the present invention, there is provided a method for manufacturing a radar cover which is disposed on an electric wave traveling path of a radar unit which detects a surrounding situation of a vehicle, the method including: a transparent member forming step of forming a plate-shaped transparent member having a first surface and a second surface on the side opposite to the first surface and formed of resin; a colored layer forming step of forming a colored layer including an outer edge portion of the transparent member on the second surface of the transparent member; a support member forming step of forming a support member joined to the second surface of the transparent member in a state where at least a part of the outer edge portion of the second surface of the transparent member is exposed; and a covering film forming step of forming a covering film which covers the colored layer in an area which is not covered with the support member.

In the covering film forming step, the covering film may be formed by disposing a mold which is disposed to face the colored layer with a gap therebetween in the area in which the covering film is to be formed, and filling the gap with molten resin.

The covering film forming step may be performed in the same step as the support member forming step.

### EFFECTS OF THE INVENTION

According to the first and second aspects of the present invention, in the surface on the support member side of the transparent member (the surface on which the support member is provided in the transparent member), the colored layer formation area and the inner wall surface of the recessed portion are bent and connected to each other. For this reason, it is possible to prevent the end portion of the colored layer formed in the colored layer formation area from meandering unintentionally.

According to the third and fourth aspects of the present invention, the covering film covering the colored layer in the area which is not covered by the support member, of the outer edge portion of the transparent member, is provided. For this reason, even in the area which is not covered with the support member, exposure of the colored layer can be prevented by the covering film, and thus the colored layer can be protected. Therefore, according to the third and fourth aspects of the present invention, in the radar cover in which the support member is joined to the back surface of the transparent member, it is possible to suppress deterioration of the colored layer which is not covered with the support member at the outer edge portion of the transparent member.

### BRIEF DESCRIPTION OF THE DRAWINGS

FIG. 1 is a front view schematically showing a radar cover in an embodiment of the present invention.
FIG. 2A is a sectional view (A-A sectional view) taken along line A-A shown in FIG. 1.
FIG. 2B is a sectional view (B-B sectional view) taken along line B-B shown in FIG. 1.
FIG. 3A is an enlarged view of a painted recessed portion shown in FIG. 2B.
FIG. 3B is a further enlarged view of a boundary portion between the painted recessed portion and a printed layer formation area in FIG. 3A.
FIG. 4A is a schematic diagram showing a method for manufacturing a radar cover in a first embodiment of the present invention.
FIG. 4B is a schematic diagram showing the method for manufacturing a radar cover in the first embodiment of the present invention.
FIG. 5A is a schematic diagram showing the method for manufacturing a radar cover in the first embodiment of the present invention.
FIG. 5B is a schematic diagram showing the method for manufacturing a radar cover in the first embodiment of the present invention.
FIG. 6A is a schematic diagram showing the method for manufacturing a radar cover in the first embodiment of the present invention.
FIG. 6B is a schematic diagram showing the method for manufacturing a radar cover in the first embodiment of the present invention.
FIG. 7 is a schematic diagram showing the method for manufacturing a radar cover in the first embodiment of the present invention.
FIG. 8A is a schematic diagram showing the method for manufacturing a radar cover in the first embodiment of the present invention.
FIG. 8B is a schematic diagram showing the method for manufacturing a radar cover in the first embodiment of the present invention.
FIG. 9 is a front view schematically showing a radar cover in a second embodiment of the present invention.
FIG. 10A is a sectional view (C-C sectional view) taken along line C-C shown in FIG. 9.
FIG. 10B is a sectional view (D-D sectional view) taken along line D-D shown in FIG. 9.
FIG. 11 is an enlarged sectional view including a part of a covering film with which the radar cover in the second embodiment of the present invention is provided.
FIG. 12A is a schematic diagram showing a method for manufacturing a radar cover in the second embodiment of the present invention.
FIG. 12B is a schematic diagram showing the method for manufacturing a radar cover in the second embodiment of the present invention.
FIG. 13A is a schematic diagram showing the method for manufacturing a radar cover in the second embodiment of the present invention.
FIG. 13B is a schematic diagram showing the method for manufacturing a radar cover in the second embodiment of the present invention.
FIG. 14A is a schematic diagram showing the method for manufacturing a radar cover in the second embodiment of the present invention.
FIG. 14B is a schematic diagram showing the method for manufacturing a radar cover in the second embodiment of the present invention.
FIG. 15 is a schematic diagram showing the method for manufacturing a radar cover in the second embodiment of the present invention.
FIG. 16A is a schematic diagram showing the method for manufacturing a radar cover in the second embodiment of the present invention.
FIG. 16B is a schematic diagram showing the method for manufacturing a radar cover in the second embodiment of the present invention.
FIG. 17 is an enlarged sectional view including an area in which the covering film is to be formed in the method for manufacturing a radar cover in the second embodiment of the present invention.

### EMBODIMENTS FOR CARRYING OUT THE INVENTION

Hereinafter, a radar cover and a method for manufacturing the radar cover according to a first embodiment of the present invention will be described with reference to the drawings. In the following drawings, in order to make each member have a recognizable size, the scale of each member is appropriately changed.

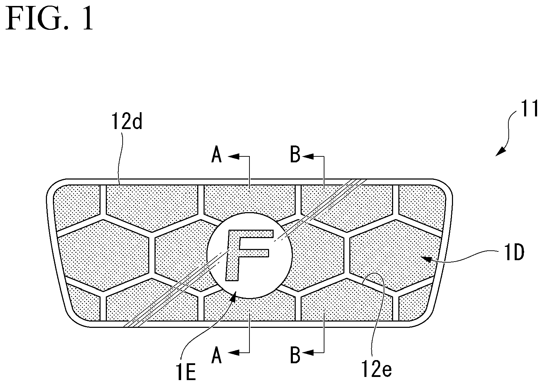

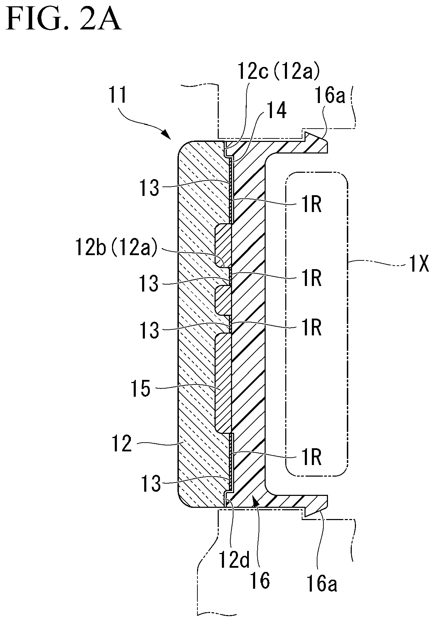

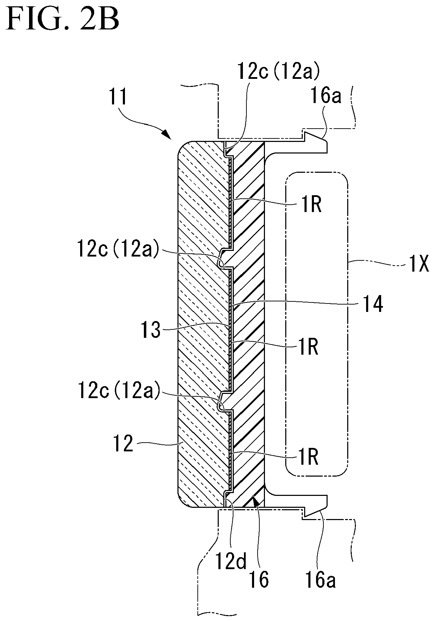

FIG. 1 is a front view schematically showing a radar cover 11 according to this embodiment. Further, FIG. 2A is an A-A sectional view in FIG. 1. Further, FIG. 2B is a B-B sectional view in FIG. 1. As shown in FIG. 1, the radar cover 11 according to this embodiment has an emblem 1E disposed at the center and a net-like outer design part 1D provided around the emblem 1E. In FIG. 1, a part of the emblem 1E and a part of the outer design part 1D are shown in white. However, the areas shown in white are set to be silver in this embodiment. Further, the areas shown in a dot pattern of the emblem 1E and the outer design part 1D are set to be black in this embodiment.

As shown in FIGS. 2A and 2B, the radar cover 11 according to this embodiment is disposed so as to cover a radar unit 1X which detects a surrounding situation of a vehicle, from the front side of the vehicle, and has the permeability to electric waves which are used in the radar unit 1X. The radar cover 11 according to this embodiment is disposed on an electric wave traveling path of the radar unit 1X (at an area through which the electric waves which are emitted from the radar unit 1X propagate), and as shown in FIGS. 2A and 2B, the radar cover 11 includes a transparent member 12, a printed layer 13 (a colored layer or a first colored layer), a paint layer 14, an inner core 15, and a support member 16.

The transparent member 12 is formed of a transparent resin material and a member disposed on the outermost side of the vehicle, among constituent members of the radar cover 11. The transparent member 12 is formed such that a front-side surface (an outer surface or a first surface) is a smooth surface in order to enhance the visibility of the emblem 1E or the outer design part 1D from the outside of the vehicle. Further, a recessed portion 12a is formed on a back-side surface (a surface on the support member 16 side, a second surface on the side opposite to the first surface, or a second surface) of the transparent member 12. In the radar cover 11 according to this embodiment, the transparent member 12 has, as the recessed portion 12a, an inner core accommodation recessed portion 12b in which the inner core 15 is accommodated, and a painted recessed portion 12c in which the paint layer 14 is formed by painting the inner wall surface thereof.

The inner core accommodation recessed portion 12b is formed in a circular shape around a letter "F" when viewed from the front and is formed at the center portion of the radar cover 11, at which the emblem 1E is disposed. The inner core accommodation recessed portion 12b accommodates the inner core 15 in a state where the inner core 15 is in contact with the inner wall surface thereof.

Further, the painted recessed portion 12c has a frame-like portion 12d provided in a frame shape at an outer edge portion of the radar cover 11 when viewed from the front, and a reticulate portion 12e provided in a net shape inside the frame-like portion 12d. The paint layer 14 is provided in the painted recessed portion 12c so as to cover the inner wall surface thereof. Further, a part of the support member 16 is formed in a state of being inserted into the painted recessed portion 12c, and thus the paint layer 14 is covered with the support member 16 from the back surface side.

Further, in this embodiment, an area in which the recessed portion 12a is not provided, of the surface (back surface) on the support member 16 side of the transparent member 12, is a printed layer formation area 1R (a colored layer formation area) in which the printed layer 13 is formed. The printed layer formation area 1R is formed so as to be a flat surface and is covered with the printed layer 13 from the back surface side of the transparent member 12.

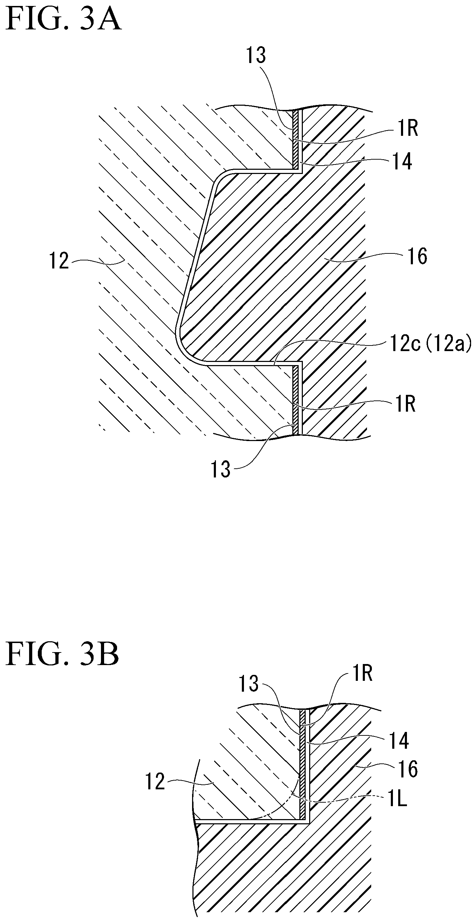

FIG. 3A is an enlarged view of the painted recessed portion 12c shown in FIG. 2B. Further, FIG. 3B is a further enlarged view of a boundary portion between the painted recessed portion 12c and the printed layer formation area 1R in FIG. 3A. As shown in FIGS. 3A and 3B, in the radar cover 11 according to this embodiment, the inner wall surface of the painted recessed portion 12c is bent and connected to the printed layer formation area 1R at an angle of approximately 90°. That is, the boundary portion between the inner wall surface of the painted recessed portion 12c and the printed layer formation area 1R is formed so as to have a so-called pin angle. It is preferable that the angle formed by the inner wall surface of the painted recessed portion 12c and the printed layer formation area 1R is 90°. However, the angle may be about 93° in consideration of a draft angle during injection molding.

Further, in the radar cover 11 according to this embodiment, the inner wall surface of the inner core accommodation recessed portion 12b is also bent and connected to the printed layer formation area 1R at an angle of approximately 90°, similarly to the inner wall surface of the painted recessed portion 12c. That is, a boundary portion between the inner wall surface of the inner core accommodation recessed portion 12b and the printed layer formation area 1R is formed so as to have a so-called pin angle.

The transparent member 12 is formed of, for example, transparent synthetic resin such as colorless PC (polycarbonate) or PMMA (polymethyl methacrylate resin), and is formed so as to have a thickness in a range of about 1.5 mm to about 10 mm. Further, the front-side surface of the transparent member 12 is subjected to hard coating treatment for preventing scratches or clear coating treatment by urethane-based paint, as necessary. If it is a transparent synthetic resin having scratch resistance, scratch prevention treatment such as hard coating treatment or clear coating treatment is unnecessary.

The printed layer 13 is a thin film layer printed on the printed layer formation area 1R of the transparent member 12, and in this embodiment, the printed layer 13 is formed so as to be black, as described above. The printed layer 13 is formed by transferring black ink to the printed layer formation area 1R and drying the ink. The printed layer 13 can be formed by disposing black resin ink capable of transmitting electric waves which are used in the radar unit 1X on the printed layer formation area 1R by, for example, a silk printing method and naturally drying the resin ink. The printed layer 13 is configured to be able to be visually recognized from the outside through the transparent member 12 and forms the areas shown in a dot pattern shown in FIG. 1.

The paint layer 14 is a thin film layer formed by drying silver paint capable of transmitting the electric waves which are used in the radar unit 1X, and in this embodiment, the paint layer 14 is formed so as to have silver, as described above.

The paint layer 14 is provided on the entire back surface of the transparent member 12 on which the printed layer 13 is formed, except for the area in which the emblem 1E is formed, as shown in FIGS. 2A and 2B. That is, the paint layer 14 covers the surface on the support member 16 side of the printed layer 13 except for the area in which the emblem 1E is formed. The paint layer 14 can be formed by applying paint containing, for example, a pearl pigment and naturally drying the paint. The paint layer 14 is configured to be able to be visually recognized from the outside through the transparent member 12 in the painted recessed portion 12c and forms the area shown in white of the outer design part 1D shown in FIG. 1.

The inner core 15 has a base portion which is formed of resin capable of transmitting the electric waves which are used in the radar unit 1X, and a glittering film formed so as to cover the surface of the base portion. As the glittering film, it is possible to use, for example, an indium film configured to be a discontinuous film formed with a large number of gaps through which the electric waves can pass. Such an indium film can be formed by, for example, a vacuum evaporation method or a sputtering method. The inner core 15 may have a transparent topcoat layer which covers the front surface of the glittering film, or an undercoat layer which covers the back surface of the glittering film. The inner core 15 is fitted and disposed in the inner core accommodation recessed portion 12b of the transparent member 12 such that the glittering film is disposed to face the inner wall surface of the inner core accommodation recessed portion 12b. The inner core 15 is configured to be able to be visually recognized from the outside through the transparent member 12 and forms the area shown in white of the emblem 1E shown in FIG. 1.

The support member 16 is a part which is joined to the back surface of the transparent member 12 and supports the transparent member 12, and is formed of a black resin material. The support member 16 has an engagement portion 16a protruding toward the engine compartment side. The engagement portion 16a is formed to have a tip portion formed in a claw shape, and the tip portion is locked to, for example, a radiator grille main body or the like. The support member 16 is formed of synthetic resin such as ABS (acrylonitrile butadiene styrene copolymer resin), AES (acrylonitrile ethylene styrene copolymer resin), ASA (acrylonitrile styrene acrylate), PBT (polybutylene terephthalate), colored PC, or PET (polyethylene terephthalate), or a composite resin thereof, and is formed in a thickness in a range of about 1.0 mm to about 10 mm.

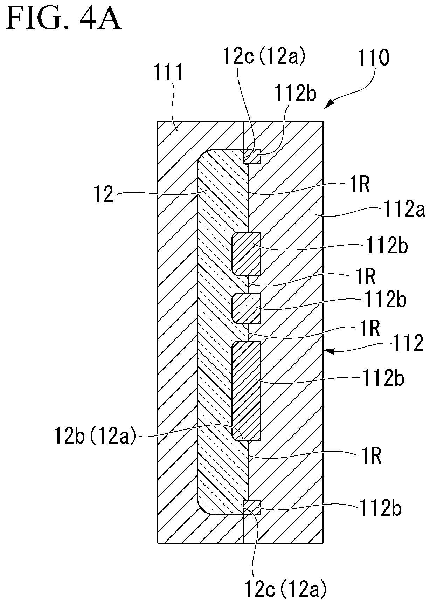

Subsequently, a method for manufacturing the radar cover 11 according to this embodiment will be described with reference to FIGS. 4A to 8B.

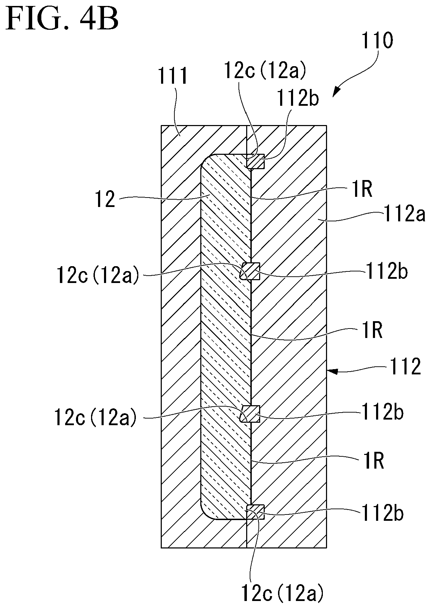

First, as shown in FIGS. 4A and 4B, the transparent member 12 is formed. FIG. 4A is a sectional view at the position (the A-A cross-section) corresponding to FIG. 2A, and FIG. 4B is a sectional view at the position (the B-B cross-section) corresponding to FIG. 2B. Here, the transparent member 12 is formed by injection molding using a mold 110. The mold 110 has a fixed side cavity mold 111 (a fixed cavity mold) and a moving side core mold 112 (a movable core mold). Further, in this embodiment, the core mold 112 has a base 112a for forming the printed layer formation area 1R, and an insert block 112b for forming the recessed portion 12a. The insert block 112b is configured to be a separate body from the base 112a of the core mold 112 and protrudes from the surface of the base 112a toward the cavity mold 111 side in a state of being fixed to the base 112a. In this manner, the insert block 112b is provided in the core mold 112, whereby the surface of the base 112a and the surface of the insert block 112b can be bent and connected to each other, and thus it is possible to form the transparent member 12 in which the printed layer formation area 1R and the inner wall surface of the recessed portion 12a are bent and connected to each other. The step shown in FIGS. 4A and 4B is a step of forming the transparent member 12 having the recessed portion 12a in which the inner wall surface is formed to be bent with respect to the printed layer formation area 1R and corresponds to a transparent member forming step in this embodiment.

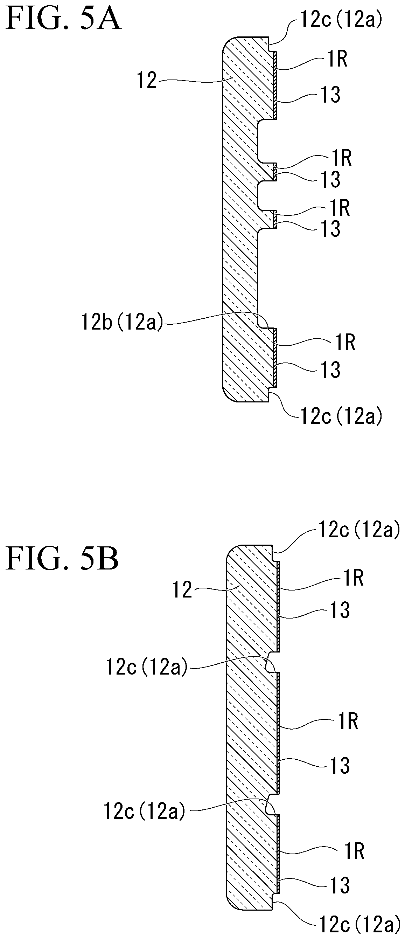

Subsequently, as shown in FIGS. 5A and 5B, the printed layer 13 is formed. FIG. 5A is a sectional view at the position (the A-A cross-section) corresponding to FIG. 2A, and FIG. 5B is a sectional view at the position (the B-B cross-section) corresponding to FIG. 2B. Here, the printed layer 13 is formed by transferring ink to the printed layer formation area 1R which is an area except for the recessed portion 12a of the transparent member 12 by a printing method such as a silk printing method and drying the ink. At this time, in the radar cover 11 according to this embodiment, the printed layer formation area 1R and the inner wall surface of the recessed portion 12a are bent and connected to each other. For this reason, the ink transferred to the printed layer formation area 1R is hard to move to the inner wall surface of the recessed portion 12a, compared to a case where the printed layer formation area 1R and the inner wall surface of the recessed portion 12a are connected to each other with a smooth curved surface. According to the method for manufacturing the radar cover 11 according to this embodiment, it is possible to prevent an end portion of the printed layer 13 from meandering unintentionally. The step shown in FIGS. 5A and 5B is a step of forming the printed layer 13 on the printed layer formation area 1R of the transparent member 12 and corresponds to a colored layer forming step in this embodiment.

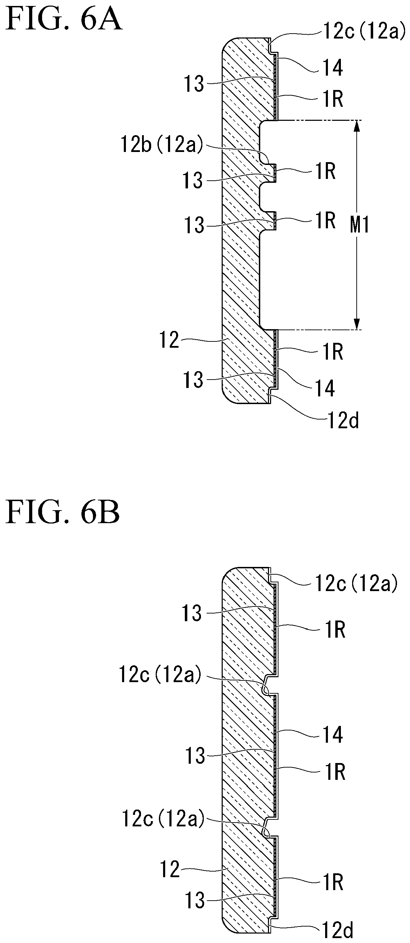

Subsequently, as shown in FIGS. 6A and 6B, the paint layer 14 is formed. FIG. 6A is a sectional view at the position (the A-A cross-section) corresponding to FIG. 2A, and FIG. 6B is a sectional view at the position (the B-B cross-section) corresponding to FIG. 2B. Here, the paint layer 14 is formed by applying silver-colored mica paint to the back surface side of the transparent member 12 on which the printed layer 13 is formed, for example, by spraying, in a state where an area M1 in which the emblem 1E is to be formed, shown in FIG. 6A, is masked, and drying the mica paint. In the paint layer 14 formed in this way, the paint layer 14 which covers the printed layer 13 except for the area in which the emblem 1E is to be formed, and is directly stuck to the inner wall surfaces of all the painted recessed portions 12c is formed. The step shown in FIGS. 6A and 6B is a step of applying paint having a color different from that of the printed layer 13 to the inner wall surface of the painted recessed portion 12c which is a part of the recessed portion 12a, before the support member 16 is formed, and corresponds to an application step in this embodiment.

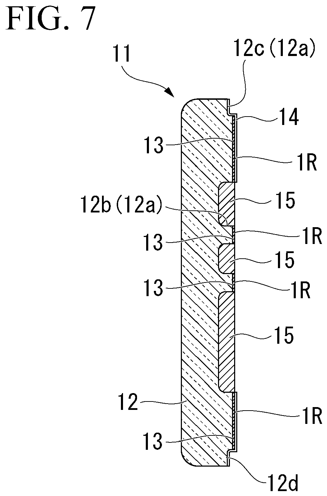

Subsequently, as shown in FIG. 7, the inner core 15 is accommodated in the inner core accommodation recessed portion 12b. FIG. 7 is a sectional view at the position (the A-A cross-section) corresponding to FIG. 2A. Here, the inner core 15 formed in parallel with the formation of the transparent member 12, the printed layer 13, or the paint layer 14 described above is accommodated in the inner core accommodation recessed portion 12b. The inner core 15 is formed by forming a glittering discontinuous metal film such as an indium layer on the base portion formed by injection molding previously, by a vacuum evaporation method, a sputtering method, or the like. In the inner core 15, the topcoat layer or the undercoat layer is formed as necessary. The inner core 15 is accommodated in the inner core accommodation recessed portion 12b with the glittering discontinuous metal film facing the inner wall surface side of the inner core accommodation recessed portion 12b. The step shown in FIG. 7 is a step of accommodating the inner core 15 having a glittering discontinuous film in at least a part of the recessed portion 12a and corresponds to an inner core installation step in this embodiment.

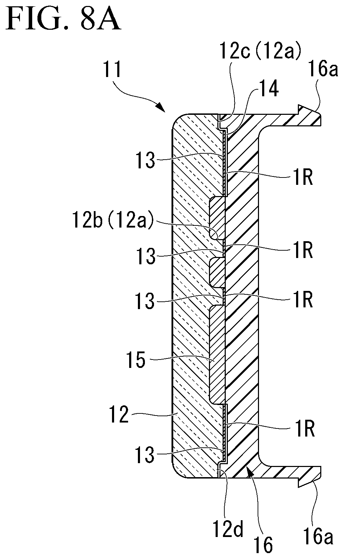

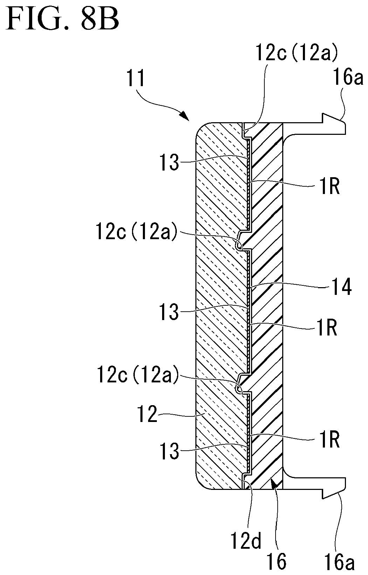

Subsequently, as shown in FIGS. 8A and 8B, the support member 16 is formed. FIG. 8A is a sectional view at the position (the A-A cross-section) corresponding to FIG. 2A, and FIG. 8B is a sectional view at the position (the B-B cross-section) corresponding to FIG. 2B. Here, the support member 16 is formed by disposing the transparent member 12 in which the inner core 15 is installed in the inner core accommodation recessed portion 12b, in the interior of the mold for injection molding, and performing insert molding for injecting molten resin to the back surface side of the transparent member 12. The support member 16 is welded to the transparent member 12 by the heat during the insert molding and disposed so as to cover the inner core 15. In this way, the inner core 15 is fixed to the transparent member 12. The step shown in FIGS. 8A and 8B is a step of forming the support member 16 so as to cover the surface on the printed layer formation area 1R side of the transparent member 12 and corresponds to a support member forming step in this embodiment.

According to the radar cover 11 and the method for manufacturing the radar cover 11 according to this embodiment as described above, the printed layer formation area 1R and the inner wall surface of the recessed portion 12a are bent and connected to each other on the surface on the support member 16 side of the transparent member 12. For this reason, an end portion of the printed layer 13 formed in the printed layer formation area 1R can be prevented from meandering unintentionally. For this reason, it is possible to make the border of the printed layer 13 in the emblem 1E and the outer design part 1D have an intended shape, and thus it becomes possible to improve the reproducibility of the actual design with respect to the designed design in the radar cover 11.

Further, in a case where, as shown in an imaginary line 1L in FIG. 3B, the boundary portion between the printed layer formation area 1R and the inner wall surface of the recessed portion 12a is formed as a curved surface as in the related art, it is difficult to accurately pattern the printed layer 13 or the like in the area of the curved surface. For this reason, in a case where the boundary portion between the printed layer formation area 1R and the inner wall surface of the recessed portion 12a is formed as a curved surface as in the related art, it is not possible to use the curved surface as a formation area for the printed layer 13 or the paint layer 14 in terms of design, and thus the curved surface cannot be considered as a design surface. In contrast, according to the radar cover 11 and the method for manufacturing the radar cover 11 according to this embodiment, since there is no curved surface described above, the entire area of the inner wall surface of the recessed portion 12a and the printed layer formation area 1R can be used as a design surface. That is, according to the radar cover 11 and the method for manufacturing the radar cover 11 according to this embodiment, it is possible to widely secure a design surface, and it becomes possible to improve the stereoscopic effect of, for example, the emblem 1E or the outer design part 1D.

Further, in the radar cover 11 according to this embodiment, the transparent member 12 has, as the recessed portion 12a, the painted recessed portion 12c in which paint having a color different from that of the printed layer 13 is applied to the inner wall surface thereof. For this reason, it is possible to prevent the boundary line between the printed layer 13 and the paint layer 14 from meandering unintentionally.

Further, in the radar cover 11 and the method for manufacturing the radar cover 11 according to this embodiment, the paint forming the paint layer 14 covers the entire printed layer 13 except for the formation area of the emblem 1E. For this reason, it becomes possible to protect the printed layer 13 with the paint layer 14 in the area other than the formation area of the emblem 1E.

Further, in the radar cover 11 and the method for manufacturing the radar cover 11 according to this embodiment, the transparent member 12 has, as the recessed portion 12a, the inner core accommodation recessed portion 12b in which the inner core 15 having a glittering discontinuous film is accommodated, and the inner core 15 is accommodated in the inner core accommodation recessed portion 12b, whereby the emblem 1E is formed. For this reason, it is possible to prevent the boundary line between the inner core 15 and the printed layer 13 from meandering unintentionally.

Further, in the method for manufacturing the radar cover 11 according to this embodiment, the printed layer 13 which is a colored layer is formed by a printing method. For this reason, it is possible to easily and accurately perform patterning of the colored layer.

The preferred embodiment of the present invention has been described above with reference to the accompanying drawings. However, it goes without saying that the present invention is not limited to the first embodiment described above. The shapes, combinations, or the like of the respective constituent members shown in the embodiment described above are merely examples, and various modifications can be made based on design requirements or the like within a scope which does not depart from the gist of the present invention.

For example, in the first embodiment described above, the configuration in which the color layer is the printed layer 13 has been described. However, the present invention is not limited to the embodiment described above, and it is also possible to form the colored layer by painting or the like.

Further, in the embodiment described above, the configuration in which the transparent member 12 has the inner core accommodation recessed portion 12b and the painted recessed portion 12c as the recessed portion 12a and the painted recessed portion 12c has the frame-like portion 12d and the reticulate portion 12e has been described. However, the present invention is not limited to the embodiment described above, and it is possible to apply the present invention to a radar cover having a configuration in which a transparent member has a recessed portion having an inner wall surface connected to a colored layer formation area, and a method for manufacturing the radar cover.

Further, in the embodiment described above, the configuration in which the inner core 15 is accommodated in the inner core accommodation recessed portion 12b of the transparent member 12 and the inner core 15 is sandwiched between the transparent member 12 and the support member 16 to form the emblem 1E has been described. However, the present invention is not limited to the embodiment described above and can also be applied to, for example, a radar cover having a configuration in which a glittering discontinuous film is directly formed on the surface of the transparent member 12 or the support member 16 and the inner core 15 is omitted, and a method for manufacturing the radar cover.

Hereinafter, a radar cover and a method for manufacturing the radar cover according to a second embodiment of the present invention will be described with reference to the drawings. In the following drawings, in order to make each member have a recognizable size, the scale of each member is appropriately changed.

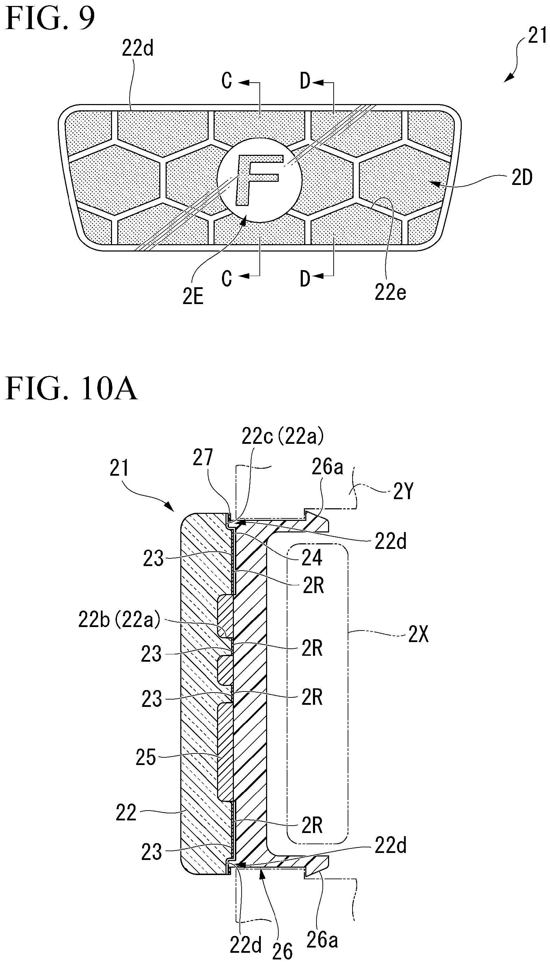

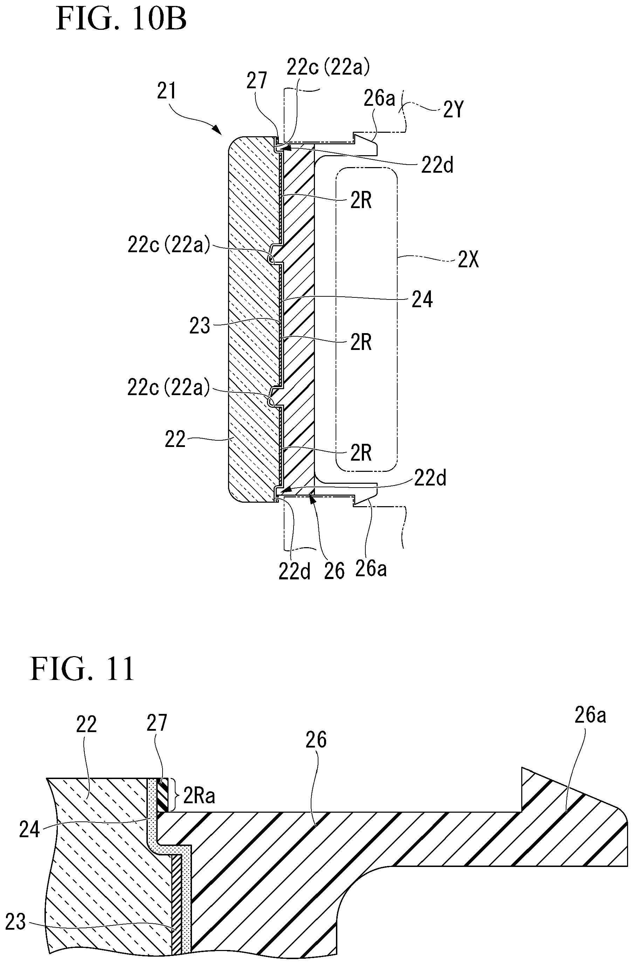

FIG. 9 is a front view schematically showing a radar cover 21 according to this embodiment. Further, FIG. 10A is an A-A sectional view in FIG. 9. Further, FIG. 10B is a B-B sectional view in FIG. 9. As shown in FIG. 9, the radar cover 21 according to this embodiment has an emblem 2E disposed at the center and a net-like outer design part 2D provided around the emblem 2E. In FIG. 9, a part of the emblem 2E and a part of the outer design part 2D are shown in white. However, the areas shown in white are set to be silver in this embodiment. Further, the areas shown in a dot pattern of the emblem 2E and the outer design part 2D are set to be black in this embodiment.

As shown in FIGS. 10A and 10B, the radar cover 21 according to this embodiment is disposed so as to cover a radar unit 2X which detects a surrounding situation of the vehicle, from the front side of the vehicle, and has the permeability to electric waves which are used in the radar unit 2X. The radar cover 21 according to this embodiment is disposed on an electric wave path of the radar unit 2X (at an area through which the electric waves which are emitted from the radar unit 2X propagate), and as shown in FIGS. 10A and 10B, the radar cover 21 includes a transparent member 22, a printed layer 23, a paint layer 24 (a colored layer or a second colored layer), an inner core 25, a support member 26, and a covering film 27. In the radar cover 21 according to this embodiment, an engagement portion 26a formed integrally with the support member 26 is engaged with a mounting seat portion (a two-dot chain line 2Y in the drawing) formed on the radiator grille side, whereby the radar cover 21 is assembled to the radiator grille. Further, the radiator grille is assembled to a vehicle body.

The transparent member 22 is formed in a plate shape with a transparent resin material and is a member disposed on the outermost side of the vehicle, among constituent members of the radar cover 21. In the transparent member 22, a front-side surface (an outer surface or a first surface) thereof is made to be a smooth surface in order to enhance the visibility of the emblem 2E or the outer design part 2D from the outside of the vehicle. Further, a recessed portion 22a dug toward the front surface side is formed on a back-side surface (a surface on the support member 26 side, a second surface on the side opposite to the first surface, or a second surface) of the transparent member 22. In the radar cover 21 according to this embodiment, the transparent member 22 has, as the recessed portion 22a, an inner core accommodation recessed portion 22b in which the inner core 25 is accommodated, and a painted recessed portion 22c in which the paint layer 24 is formed by painting the inner wall surface thereof.

Further, in the radar cover 21 according to this embodiment, the transparent member 22 is formed larger than the support member 26 when viewed from the front side, and thus an outer edge portion thereof protrudes from the support member 26. That is, the back surface side of the outer edge portion of the transparent member 22 is not covered with the support member 26. This is because, rather than the radar cover 21 including the transparent member 22 as well being mounted so as to be fitted into an opening of a mounting part of the radiator grille, the mounting seat portion 2Y of the radiator grille and the transparent member 22 partially overlapping each other, as shown in FIGS. 10A and 10, and the transparent member 22 being mounted so as to protrude to the front face (the left side in the drawing) of a mounting surface exhibit a more excellent appearance in terms of design.

The inner core accommodation recessed portion 22b is formed in a circular shape around a letter "F" when viewed from the front and is formed in the center portion of the radar cover 21, at which the emblem 2E is disposed. The inner core accommodation recessed portion 22b accommodates the inner core 25 in a state where the inner core 25 is in contact with the inner wall surface thereof.

Further, the painted recessed portion 22c has a frame-like portion 22d provided in a frame shape at an outer edge portion of the radar cover 21 when viewed from the front, and a reticulate portion 22e provided in a net shape inside the frame-like portion 22d. The paint layer 24 is provided in the painted recessed portion 22c so as to cover the inner wall surface. Further, a part of the support member 26 is in a state of being inserted into the painted recessed portion 22c, and thus the paint layer 24 is covered with the support member 26 from the back surface side.

The area in which the recessed portion 22a is not provided, of the surface (back surface) on the support member 26 side of the transparent member 22, is a printed layer formation area 2R in which the printed layer 23 is formed. The printed layer formation area 2R is formed so as to be a flat surface and is covered with the printed layer 23 from the back surface side of the transparent member 22.

The transparent member 22 is formed of, for example, a transparent synthetic resin such as colorless PC (polycarbonate) or PMMA (polymethyl methacrylate resin), and is formed so as to have a thickness in a range of about 1.5 mm to about 10 mm. Further, the front-side surface of the transparent member 22 is subjected to hard coating treatment for preventing scratches or clear coating treatment by urethane-based paint, as necessary. If it is a transparent synthetic resin having scratch resistance, scratch prevention treatment such as hard coating treatment or clear coating treatment is unnecessary.

The printed layer 23 is a thin film layer printed on the printed layer formation area 2R of the transparent member 22, and in this embodiment, the printed layer 23 is formed so as to be black, as described above. The printed layer 23 is formed by transferring black ink to the printed layer formation area 2R and drying the ink. The printed layer 23 can be formed by disposing black resin ink capable of transmitting the electric waves which are used in the radar unit 2X on the printed layer formation area 2R by, for example, a silk printing method, and naturally drying the resin ink. The printed layer 23 is configured to be able to be visually recognized from the outside through the transparent member 22 and forms the area shown in a dot pattern shown in FIG. 9.

The paint layer 24 is a thin film layer formed by drying silver paint capable of transmitting the electric waves which are used in the radar unit 2X, and in this embodiment, the paint layer 24 is formed so as to have silver, as described above.

The paint layer 24 is provided on the entire back surface of the transparent member 22 on which the printed layer 23 is formed, except for the area in which the emblem 2E is formed, as shown in FIGS. 10A and 10B. That is, the paint layer 24 covers the surface on the support member 26 side of the printed layer 23 except for the area in which the emblem 2E is formed. Further, the paint layer 24 is formed to cover the area on the back surface side of the outer edge portion of the transparent member 22, which is not covered with the support member 26. The paint layer 24 can be formed by applying paint containing, for example, a pearl pigment and naturally drying the paint. The paint layer 24 is configured to be able to be visually recognized from the outside through the transparent member 22 in the painted recessed portion 22c and forms the area shown in white of the outer design part 2D shown in FIG. 9.

The inner core 25 has a base portion which is formed of resin capable of transmitting the electric waves which are used in the radar unit 2X, and a glittering film formed so as to cover the surface of the base portion. As the glittering film, it is possible to use, for example, an indium film configured to be a discontinuous film formed with a large number of gaps through which the electric waves can pass. Such an indium film can be fonned by, for example, a vacuum evaporation method or a sputtering method. The inner core 25 may have a transparent topcoat layer which covers the front surface of the glittering film, or an undercoat layer which covers the back surface of the glittering film. The inner core 25 is fitted and disposed in the inner core accommodation recessed portion 22b of the transparent member 22 such that the glittering film is disposed to face the inner wall surface of the inner core accommodation recessed portion 22b. The inner core 25 is configured to be able to be visually recognized from the outside through the transparent member 22 and forms the area shown in white of the emblem 2E shown in FIG. 9.

The support member 26 is a part which is joined to the back surface of the transparent member 22 and supports the transparent member 22, and is formed of a black resin material. In this embodiment, the support member 26 is smaller than the transparent member 22 when viewed from the front and is joined to the back surface of the transparent member 22 in a state where the back surface side of the outer edge portion of the transparent member 22 (the outer edge portion of the back surface in the transparent member 22) is exposed. Further, the support member 26 has the engagement portion 26a protruding toward the engine compartment side. The engagement portion 26a is formed to have a tip portion formed in a claw shape, and the tip portion is locked to, for example, a radiator grille main body or the like. The support member 26 is formed of synthetic resin such as ABS (acrylonitrile butadiene styrene copolymer resin), AES (acrylonitrile ethylene styrene copolymer resin), ASA (acrylonitrile styrene acrylate), PBT (polybutylene terephthalate), colored PC, or PET (polyethylene terephthalate), or composite resin thereof, and is formed in a thickness in a range of about 1.0 mm to about 10 mm.

FIG. 11 is an enlarged sectional view including a part of the covering film 27. As shown in FIG. 11, the covering film 27 is provided in an area 2Ra which is located on the back surface side of the outer edge portion of the transparent member 22 and is not covered with the support member 26, as shown in FIGS. 10A and 10B. The covering film 27 is provided so as to cover the paint layer 24 (overlap the paint layer 24) in the area 2Ra which is not covered with the support member 26. The covering film 27 is configured such that a thickness (a dimension and length in a direction perpendicular to the back surface of the transparent member 22) is set smaller than that of the support member 26 and is equal to or less than a fraction (for example, one third) of the thickness of the area of the support member 26, in which the engagement portion 26a is not provided. Further, the covering film 27 is formed of the same material as that of the support member 26 and is provided integrally with the support member 26. The covering film 27 prevents the paint layer 24 from coming into contact with outside air or rainwater and suppresses deterioration of the paint layer 24. Further, even if the mounting seat portion 2Y of the radiator grille hits against the transparent member 22 due to vibration during traveling of the vehicle after the radar cover 21 is mounted to the radiator grille (the vehicle), since the covering film 27 is interposed between the mounting seat portion 2Y and the transparent member 22, the paint layer 24 is not peeled off, and the external appearance quality of the radar cover 21 can be satisfactorily maintained over a long period of time.

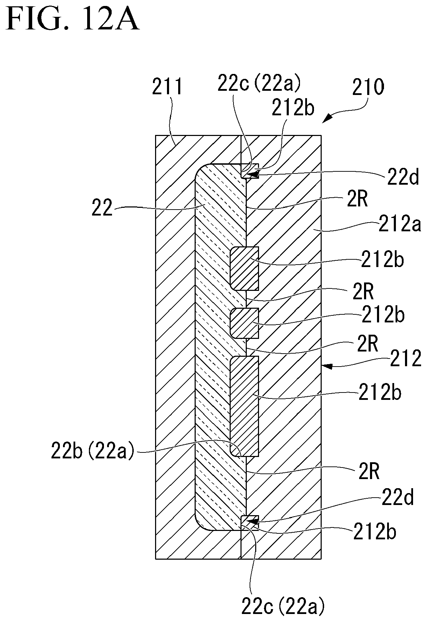

Subsequently, a method of manufacturing the radar cover 21 according to this embodiment will be described with reference to FIGS. 12A to 17.

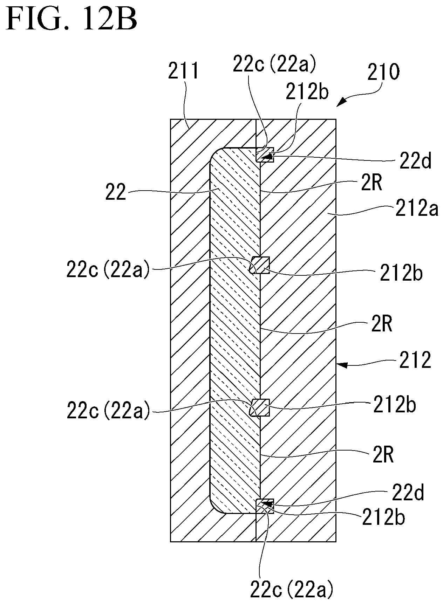

First, as shown in FIGS. 12A and 12B, the transparent member 22 is formed. FIG. 12A is a sectional view at the position (the C-C cross-section) corresponding to FIG. 10A, and FIG. 12B is a sectional view at the position (the D-D cross-section) corresponding to FIG. 10B. Here, the transparent member 22 is formed by injection molding using a mold 210. The mold 210 has a fixed side cavity mold 211 (a fixed cavity mold) and a moving side core mold 212 (a movable core mold). In this embodiment, the core mold 212 has a base 212a for forming the printed layer formation area 2R, and an insert block 212b for forming the recessed portion 22a. The insert block 212b is configured to be a separate body from the base 212a of the core mold 212 and protrudes from the surface of the base 212a toward the cavity mold 211 side in a state of being fixed to the base 212a. The step shown in FIGS. 12A and 12B is a step of forming the plate-shaped transparent member 22 formed of resin and corresponds to a transparent member forming step in this embodiment.

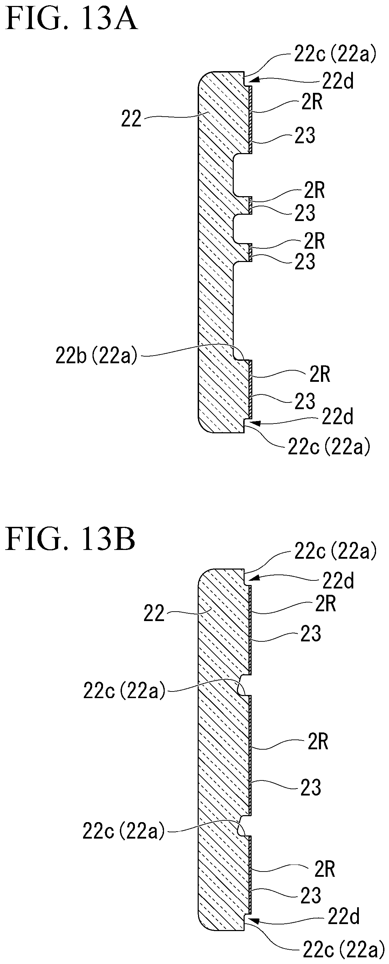

Subsequently, as shown in FIGS. 13A and 13B, the printed layer 23 is formed. FIG. 13A is a sectional view at the position (the C-C cross-section) corresponding to FIG. 10A, and FIG. 13B is a sectional view at the position (the D-D cross-section) corresponding to FIG. 10B. Here, the printed layer 23 is formed by transferring ink to the printed layer formation area 2R which is an area except for the recessed portion 22a of the transparent member 22 by a printing method such as a silk printing method and drying the ink.

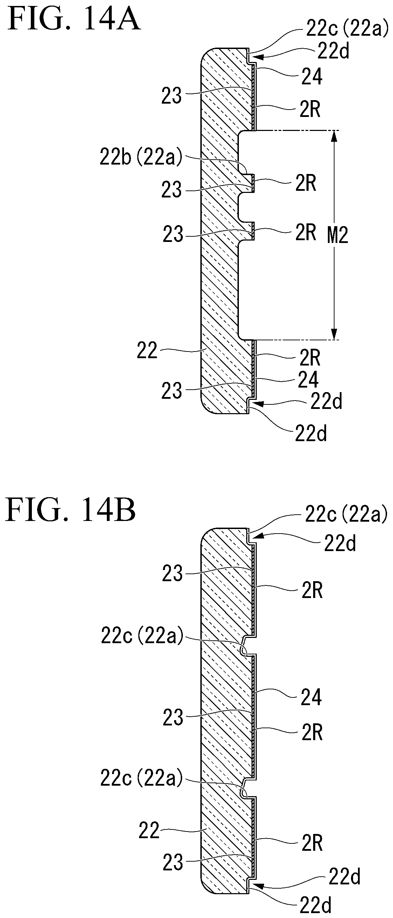

Subsequently, as shown in FIGS. 14A and 14B, the paint layer 24 is formed. FIG. 14A is a sectional view at the position (the C-C cross-section) corresponding to FIG. 10A, and FIG. 14B is a sectional view at the position (the D-D cross-section) corresponding to FIG. 10B. Here, the paint layer 24 is formed by applying silver-colored mica paint to the back surface side of the transparent member 22, on which the printed layer 23 is formed, for example, by spraying, in a state where an area M2 in which the emblem 2E is to be formed, shown in FIG. 14A, is masked, and drying the mica paint. In the paint layer 24 formed in this way, the paint layer 24 which covers the printed layer 23 except for the area in which the emblem 2E is to be formed, and is directly stuck to the inner wall surfaces of all the painted recessed portions 22c, is formed. The step shown in FIGS. 14A and 14B is a step of forming the paint layer 24 which is a colored layer including the outer edge portion of the transparent member 22 on the back surface side of the transparent member 22 and corresponds to a colored layer forming step in this embodiment.

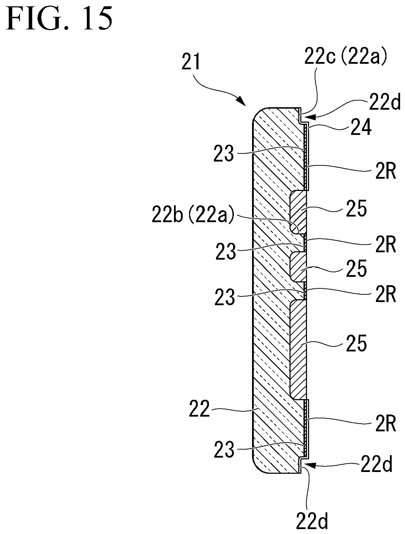

Subsequently, as shown in FIG. 15, the inner core 25 is accommodated in the inner core accommodation recessed portion 22b. FIG. 15 is a sectional view at the position (the C-C cross-section) corresponding to FIG. 10A. Here, the inner core 25 formed in parallel with the formation of the transparent member 22, the printed layer 23, or the paint layer 24 described above is accommodated in the inner core accommodation recessed portion 22b. The inner core 25 is formed by forming a glittering discontinuous metal film such as an indium layer on the base portion formed by injection molding previously, by a vacuum evaporation method, a sputtering method, or the like. In the inner core 25, a topcoat layer or an undercoat layer is formed as necessary. The inner core 25 is accommodated in the inner core accommodation recessed portion 22b with the glittering discontinuous metal film facing the inner wall surface side of the inner core accommodation recessed portion 22b.

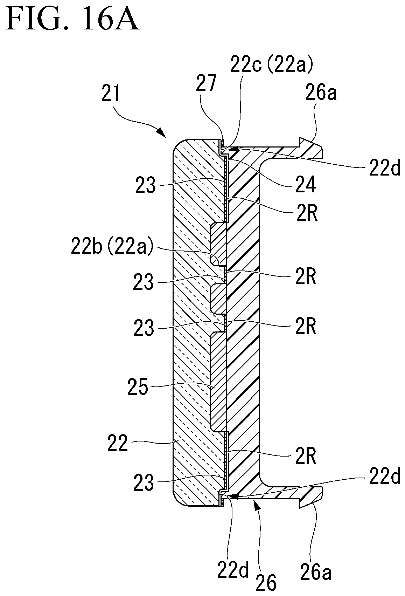

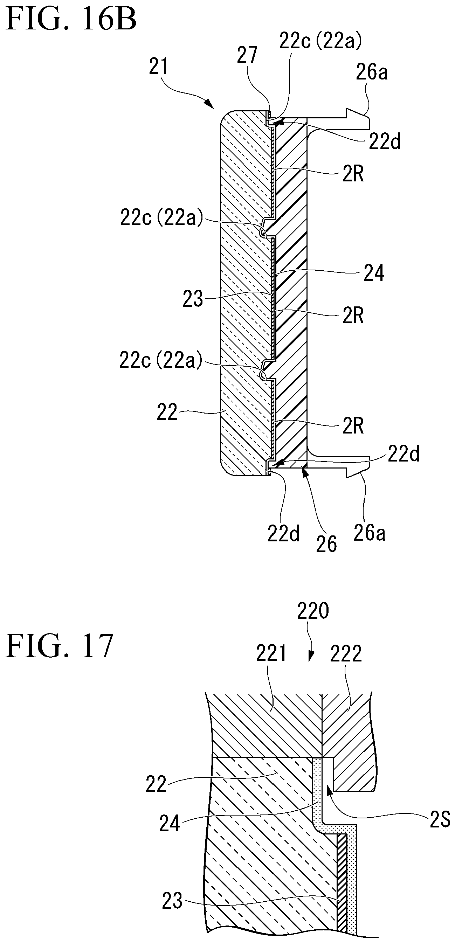

Subsequently, as shown in FIGS. 16A and 16B, the support member 26 and the covering film 27 are formed. FIG. 16A is a sectional view at the position (the C-C cross-section) corresponding to FIG. 10A, and FIG. 16B is a sectional view at the position (the D-D cross-section) corresponding to FIG. 10B. Here, the support member 26 is formed by disposing the transparent member 22 in which the inner core 25 is installed in the inner core accommodation recessed portion 22b, in the interior of a mold for insert molding 220 (refer to FIG. 17), and performing insert molding for injecting molten resin to the back surface side of the transparent member 22. The support member 26 is welded to the transparent member 22 by the heat during the insert molding and disposed so as to cover the inner core 25. In this way, the inner core 25 is fixed to the transparent member 22.

Further, in a case of performing the insert molding, as shown in the enlarged view of FIG. 17, a core mold 222 of the mold for insert molding 220 having a cavity mold 221 and the core mold 222 is disposed with a gap 2S between the core mold 222 and the paint layer 24 in the area in which the covering film 27 is to be formed. Then, the covering film 27 is formed by filling the gap 2S with molten resin. That is, in this embodiment, the covering film 27 is formed in the same step as the support member 26.

The step shown in FIGS. 16A, 16B, and 17 is a step of forming the support member 26 joined to the back surface of the transparent member 22 in a state where the back surface side of the outer edge portion of the transparent member 22 is exposed, and is a step of forming the covering film 27 which covers the paint layer 24 in the area which is not covered with the support member 26. That is, the step shown in FIGS. 16A, 16B, and 17 is a support member forming step in this embodiment and corresponds to a covering film forming step in this embodiment.

According to the radar cover 21 and the method for manufacturing the radar cover 21 according to this embodiment as described above, the covering film 27 covers the paint layer 24 in the area 2Ra which is not covered with the support member 26, of the outer edge portion of the transparent member 22. For this reason, even in the area 2Ra which is not covered with the support member 26, exposure of the paint layer 24 can be prevented by the covering film 27, and thus the paint layer 24 can be protected. Therefore, according to the radar cover 21 and the method for manufacturing the radar cover 21 according to this embodiment, it becomes possible to suppress deterioration of the paint layer 24 which is not covered with the support member 26 at the outer edge portion of the transparent member 22.

Further, in the radar cover 21 according to this embodiment, the thickness of the covering film 27 is set to be smaller than the thickness of the support member 26. That is, in the radar cover 21 according to this embodiment, the covering film 27 is formed thinner than the support member 26. For this reason, the covering film 27 can be formed with a minimum amount of a forming material, and thus the radar cover 21 can be reduced in size and weight.

Further, in the radar cover 21 according to this embodiment, the covering film 27 is formed of the same material as that of the support member 26. For this reason, the support member 26 and the covering film 27 can be integrally formed, and the covering film 27 can be firmly fixed to the support member 26. Therefore, peeling-off of the covering film 27 due to aging deterioration or the like can be prevented.

Further, in the method for manufacturing the radar cover 21 according to this embodiment, the core mold 222 which is disposed to face the paint layer 24 with the gap 2S therebetween is disposed in the area in which the covering film 27 is to be formed, and the gap 2S is filled with molten resin to form the covering film 27. For this reason, the covering film 27 can be easily formed, and furthermore, the core mold 222 is not brought into direct contact with the paint layer 24, and thus peeling-off or the like of the paint layer 24 due to the contact of the core mold 222 with the paint layer 24 can be prevented.

Further, in the method for manufacturing the radar cover 21 according to this embodiment, the support member 26 and the covering film 27 are formed in the same step. For this reason, it is possible to reduce the number of processes for manufacturing the radar cover 21 and it is possible to manufacture the radar cover 21 in a short time and at low cost.

The preferred embodiment of the present invention has been described above with reference to the accompanying drawings. However, it goes without saying that the present invention is not limited to the second embodiment described above. The shapes, combinations, or the like of the respective constituent members shown in the embodiment described above are merely examples, and various modifications can be made based on design requirements or the like within a scope which does not depart from the gist of the present invention.

For example, in the second embodiment described above, the configuration in which the color layer in this embodiment is the paint layer 24 has been described. However, the present invention is not limited to the second embodiment described above, and for example, it is also possible to form the printed layer 23 to the back surface side of the outer edge portion of the transparent member 22 and make the printed layer 23 the colored layer in this embodiment. Further, the color of the colored layer is not particularly limited.

Further, in the second embodiment described above, the configuration in which the paint layer 24 which is a colored layer is formed on the entire circumference of the outer edge portion of the transparent member 22 has been described. However, the present invention is not limited to the second embodiment described above, and it is also possible to adopt a configuration in which the colored layer is formed only at a part of the outer edge portion of the transparent member 22.

Further, in the second embodiment described above, the configuration in which the inner core 25 is accommodated in the inner core accommodation recessed portion 22b of the transparent member 22 and the inner core 25 is sandwiched between the transparent member 22 and the support member 26 to form the emblem 2E has been described. However, the present invention is not limited to the second embodiment described above and can also be applied to, for example, a radar cover having a configuration in which a glittering discontinuous film is directly formed on the surface of the transparent member 22 or the support member 26 and the inner core 25 is omitted, and a method for manufacturing the radar cover.

The preferred embodiments of the present invention have been described above. However, it should be understood that the embodiments are illustrative embodiments of the present invention and should not be considered as limiting the present invention. Additions, omissions, substitutions, and other changes can be made without departing from the scope of the present invention. Therefore, the present invention should not be regarded as being limited by the above description and is limited by the claims.

### DESCRIPTION OF THE REFERENCE SYMBOLS

11, 21: radar cover
12, 22: transparent member
12a: recessed portion
12b: inner core accommodation recessed portion
12c: painted recessed portion
12d: frame-like portion
12e: reticulate portion
13: printed layer (colored layer or first colored layer)
14: paint layer
15, 25: inner core
16, 26: support member
23: printed layer
24: paint layer (colored layer or second colored layer)
27: covering film
110, 210: mold
111, 211: cavity mold
112, 212: core mold
220: mold for insert
221: cavity mold
222: core mold (mold)
1D, 2D: outer design part
1E, 2E: emblem
1R: printed layer formation area (colored layer formation area)
1X, 2X: radar unit

## Claims

1. A radar cover which is disposed on an electric wave traveling path of a radar unit which detects a surrounding situation of a vehicle, the radar cover comprising:
a transparent member having a first surface and a second surface on the side opposite to the first surface;
a support member which supports the second surface of the transparent member; and
a colored layer which is formed on the second surface and disposed between the second surface of the transparent member and the support member,
wherein the transparent member has a recessed portion having an inner wall surface bent and connected to a colored layer formation area in which the colored layer is formed.

2. The radar cover according to claim 1, wherein the transparent member has a painted recessed portion in which paint having a color different from that of the colored layer is applied to an inner wall surface, as the recessed portion.

3. The radar cover according to claim 2, wherein the paint covers a surface adjacent to the support member, of the colored layer.

4. The radar cover according to any one of claims 1 to 3, wherein the transparent member has an inner core accommodation recessed portion in which an inner core having a glittering discontinuous film is accommodated, as the recessed portion.

5. A method for manufacturing a radar cover which is disposed on an electric wave traveling path of a radar unit which detects a surrounding situation of a vehicle, the method comprising:
a transparent member forming step of forming a transparent member having a first surface and a second surface on the side opposite to the first surface and having a recessed portion having an inner wall surface bent and connected to a colored layer formation area in which a colored layer which is provided on the second surface is formed;
a colored layer forming step of forming the colored layer in the colored layer formation area of the transparent member; and
a support member forming step of forming a support member so as to cover a surface of the transparent member, on which the colored layer is formed.

6. The method for manufacturing a radar cover according to claim 5, wherein in the colored layer forming step, the colored layer is formed by a printing method.

7. The method for manufacturing a radar cover according to claim 5 or 6, wherein before the support member forming step, an application step of applying paint having a color different from that of the colored layer to the inner wall surface of at least a part of the recessed portion is performed.

8. The method for manufacturing a radar cover according to claim 7, wherein in the application step, the paint is applied so as to cover the colored layer.

9. The method for manufacturing a radar cover according to any one of claims 5 to 8, wherein before the support member forming step, an inner core installation step of accommodating an inner core having a glittering discontinuous film in at least a part of the recessed portion is performed.

10. A radar cover which is disposed on an electric wave traveling path of a radar unit which detects a surrounding situation of a vehicle, the radar cover comprising:
a plate-shaped transparent member having a first surface and a second surface on the side opposite to the first surface and formed of resin;
a support member which supports the second surface of the transparent member in a state where at least a part of an outer edge portion of the second surface of the transparent member is exposed;
a colored layer which is formed at least in an area which is the outer edge portion of the second surface of the transparent member and is not covered with the support member; and
a covering film which covers the colored layer in the area which is not covered with the support member.

11. The radar cover according to claim 10, wherein a thickness of the covering film is smaller than a thickness of the support member.

12. The radar cover according to claim 10 or 11, wherein the covering film is formed of the same material as that of the support member.

13. A method for manufacturing a radar cover which is disposed on an electric wave traveling path of a radar unit which detects a surrounding situation of a vehicle, the method comprising:
a transparent member forming step of forming a plate-shaped transparent member having a first surface and a second surface on the side opposite to the first surface and formed of resin;
a colored layer forming step of forming a colored layer including an outer edge portion of the transparent member on the second surface of the transparent member;
a support member forming step of forming a support member joined to the second surface of the transparent member in a state where at least a part of the outer edge portion of the second surface of the transparent member is exposed; and
a covering film forming step of forming a covering film which covers the colored layer in an area which is not covered with the support member.

14. The method for manufacturing a radar cover according to claim 13, wherein in the covering film forming step, the covering film is formed by disposing a mold which is disposed to face the colored layer with a gap therebetween in the area in which the covering film is to be formed, and filling the gap with molten resin.

15. The method for manufacturing a radar cover according to claim 14, wherein the covering film forming step is performed in the same step as the support member forming step.
